# EUROPÄISCHE PATENTSCHRIFT

(11) **EP 2 966 605 B1**
(45) Veröffentlichungstag und Bekanntmachung des Hinweises auf die Patenterteilung: **21.06.2017**
(21) Anmeldenummer: 14176007.4
(22) Anmeldetag: 07.07.2014
(51) Int. Cl.: G06Q 20/02, G06Q 20/32, G06Q 20/40, G06Q 20/42

(54) **Verfahren und System zur Authentifizierung eines Benutzers**
Method and system for authenticating a user
Procédé et système destinés à l'authentification d'un utilisateur

(43) Veröffentlichungstag der Anmeldung: 13.01.2016
(73) Patentinhaber: FinPin Technologies GmbH, 1100 Wien (AT)
(72) Erfinder: Gürtler, Markus, 2531 Gaaden (AT); Koppel, Alexander, 2380 Perchtoldsdorf (AT); Randa, Florian, 1160 Wien (AT)
(74) Vertreter: Sonn & Partner Patentanwälte

(56) Entgegenhaltungen:
- WO-A1-2010/004576
- WO-A1-2012/123727
- US-A1- 2009 287 599
- US-A1- 2010 267 362
- US-A1- 2011 022 484

## Beschreibung

Die Erfindung betrifft ein Verfahren und ein System zur Authentifizierung eines Benutzers mithilfe eines Authentifizierungsdienstes sowie eines damit in Verbindung stehenden mobilen Endgeräts.

Insbesondere betrifft die Erfindung ein Verfahren und ein System, welches Internetanwendungen (d.h. praktisch beliebigen Anwendungen, sofern sie mit dem Internet verbunden sind), welchen naturgemäß eine lokale biometrische Authentifizierung nicht zur Verfügung steht, die Sicherheit und Benutzerfreundlichkeit einer biometrischen Authentifizierung von Benutzern über eine generische Schnittstelle zur Verfügung stellt. Ein Ausgangspunkt für die Erfindung ist die immer weiter zunehmende Verbreitung von biometrischen Lesegeräten, welche mittlerweile sogar auf Smartphones zunehmenden zum Einsatz kommen. Im Allgemeinen wird jedoch derzeit auf entsprechend ausgestatteten mobilen Endgeräten eine biometrische Authentifizierung lediglich für lokale Anwendungen, z.B. um den Zugriff auf das Endgerät selbst zu kontrollieren, eingesetzt. Typisch für solche lokale Anwendungen ist, dass der Authentifizierungsvorgang am Endgerät eingeleitet wird, d.h. der Benutzer wird infolge einer Interaktion mit dem mobilen Endgerät selbst zu einer Eingabe eines biometrischen Sicherheitsmerkmals aufgefordert (wobei auch diese Eingabe selbst als initiale Interaktion, z.B. beim Entsperren eines Geräts, verwendet werden kann). Externen Anwendungen wird - auch aus Sicherheitsgründen - kein direkter Zugriff von außen auf die biometrischen Lesegeräte gewährt, so dass sich solche Anwendungen weiterhin auf andere Authentifizierungsmechanismen, wie die Eingabe eines Passworts, verlassen müssen. Um eine biometrische Authentifizierung einsetzen zu können, müssten die Anwendungen zumindest teilweise auf das Endgerät verlagert werden, so dass zumindest die Authentifizierungsschritte lokal durchgeführt könnten. Dies stellt jedoch für die einzelnen Anwendungen einen vergleichsweise hohen Aufwand dar, der angesichts der unterschiedlichen und größtenteils (noch) nicht mit geeigneten Einrichtungen ausgestatteten Endgeräte wirtschaftlich kaum sinnvoll ist.

Ein derartiges Verfahren ist z.B. in EP 1 102 150 A2 gezeigt, wobei das dort gezeigte Verfahren einige Schwächen aufweist, da nicht bestimmte Transaktionen bestätigt werden können, sondern nur der Benutzer allgemein identifiziert werden kann. Das Authentifizierungsverfahren ist in diesem Fall nicht transparent für die gezeigte Anwendung, da die Adresse des mobilen Endgeräts durch die Anwendung ermittelt wird bzw. der Anwendung bekannt sein muss, damit sie eine Authentifizierung einleiten kann. Dementsprechend muss auch zwischen der Anwendung und dem mobilen Endgerät ein direktes Vertrauen (z.B. durch entsprechenden Schlüsselaustausch) hergestellt werden. Darüber hinaus kann der EP 1 102 150 A2 nicht entnommen werden, wie eine Identifikation mittels Fingerabdruck zur Authentifizierung gegenüber der Anwendung verwendet wird.

Der Erfindung liegt die Idee zugrunde, die Möglichkeit einer biometrischen Authentifizierung über einen quasi als Vermittler eingesetzten Authentifizierungsdienst zur Verfügung zu stellen, wobei die Anbindung an den Authentifizierungsdienst vorzugsweise über bereits für andere Zwecke weit verbreitete Authentifizierungsschnittstellen und -protokolle erfolgen kann. Die Anbindung einer existierenden Anwendung an einen solchen Authentifizierungsdienst ist vergleichsweise einfach realisierbar und in vielen Fällen bereits für andere Authentifizierungsdienste vorhanden.

Grundsätzlich sind derartige zentrale Authentifizierungsdienste, welche externen Anwendungen die Authentifizierung eines Benutzers über ein mobiles Endgerät ermöglichen, ebenfalls bereits bekannt. Die US 2003/0061163 A1 zeigt z.B. ein Verfahren, bei dem Kreditkartentransaktionen in Echtzeit über ein mobiles Endgerät bestätigt bzw. freigegeben werden können, wobei die Zahlung erst nach der Freigabe abgeschlossen wird. Dabei wird der Inhaber der Kreditkarte, mit welcher eine Zahlung bei einem Händler getätigt wurde über eine zentrale Vermittlungsstelle kontaktiert und aufgefordert, die Transaktion zu bestätigen oder abzulehnen.

Auch die US 7,447,784 B2 beschreibt ein Verfahren und System zur Authentifizierung eines Internet-Benutzers, wobei z.B. beim Einkauf auf einer Internet-Seite bzw. Anwendung die Identität des Benutzers über einen Authentifizierungsdienst eines Mobilfunkbetreibers überprüft wird, indem der Authentifizierungsdienst eine Authentifizierungsanfrage an das Mobiltelefon des Benutzers sendet, welche dieser zur Freigabe mit einem Passwort zu beantworten hat.

Die WO 2010/004576 A1 beschreibt ein Verfahren zur Authentifizierung von Zahlungstransaktionen in Echtzeit, wobei ein Benutzer durch Eingabe eines PINs auf einem mobilen Endgerät und Übermittlung des eingegebenen PINs zu einem Authentifizierungsserver authentifiziert wird.

Die WO 2012/123727 A1 beschreibt ein weiteres Verfahren zur Authentifikation eines Benutzers, wobei eine Anfrage an einen Authentifizierungsdienst gesendet wird, welcher seinerseits ein mobiles Endgerät kontaktiert, eine Autorisierung einholt und gegebenenfalls die Authentifikation bestätigt. Eine lokale Authentifizierung am Endgerät kann durch Eingabe eines PINs erfolgen.

Es ist Aufgabe der Erfindung, ein Verfahren bzw. ein System vorzuschlagen, welches einer externen Anwendung die Vorteile einer biometrischen Authentifizierung zur Verfügung stellt und zugleich die Nachteile, welche insbesondere mit der zur sicheren Authentifizierung nötigen initialen Einrichtung eines solchen Verfahrens zwischen der Anwendung und dem mobilen Endgerät verbunden sind (und somit die Akzeptanz derartiger Verfahren und Systeme signifikant senkt), vermeidet.

Diese Aufgabe wird bei einem Verfahren der eingangs angeführten Art erfindungsgemäß dadurch gelöst, dass eine externe Anwendung eine Anfrage mit Identifikationsdaten an einen Authentifizierungsdienst übermittelt, der Authentifizierungsdienst auf Basis der Identifikationsdaten die Adresse eines mit dem Benutzer verknüpften mobilen Endgeräts ermittelt (als Adresse gelten in diesem Zusammenhang alle Angaben, über die mit dem mobilen Endgerät Kontakt aufgenommen werden kann, z.B. eine IP-Adresse, eine Telefonnummer, eine Hardware-Adresse oder vergleichbare Angaben) und eine Anforderung mit einer Transaktionskennung an das mobile Endgerät übermittelt, das mobile Endgerät (bzw. eine auf dem mobilen Endgerät eingerichtete Authentifizierungsanwendung) die Anforderung empfängt und ausgelöst durch den Empfang der Anforderung eine Abfrage zur Eingabe eines biometrischen Sicherheitsmerkmals durchführt, nach Eingabe das eingegebene biometrische Sicherheitsmerkmal lokal authentifiziert und nur im Fall der Eingabe eines autorisierten biometrischen Sicherheitsmerkmals den Zugriff auf einen am mobilen Endgerät gespeicherten privaten Schlüssel gewährt, mit dem privaten Schlüssel die Transaktionskennung signiert und die signierte Transaktionskennung an den Authentifizierungsdienst zurück übermittelt, und der Authentifizierungsdienst die Signatur der signierten Transaktionskennung verifiziert und bei Vorliegen einer authentischen Signatur eine Bestätigung der Anfrage zur Freigabe der Anwendung zurück an die Anwendung übermittelt. Dementsprechend wird die obige Aufgabe bei einem System der eingangs angeführten Art, umfassend einen Authentifizierungsserver, welcher einen Authentifizierungsdienst hostet, und ein mobiles Endgerät, welches zur Kommunikation mit dem Authentifizierungsserver eingerichtet ist, wobei der Authentifizierungsserver einen Speicher aufweist, welcher Identifikationsdaten zur Identifikation des Benutzers und eine mit den Identifikationsdaten verknüpfte Adresse des mobilen Endgeräts enthält, wobei der Authentifizierungsdienst zum Empfang einer Anfrage mit Identifikationsdaten von einer externen Anwendung eingerichtet ist, wobei das mobile Endgeräte zur lokalen Überprüfung eines biometrischen Sicherheitsmerkmals eingerichtet ist und einen Speicher aufweist, welcher einen durch ein biometrisches Sicherheitsmerkmal geschützten privaten Schlüssel enthält, erfindungsgemäß dadurch gelöst, dass das mobile Endgerät eingerichtet ist, eine Anforderung mit einer Transaktionskennung vom Authentifizierungsdienst zu empfangen, bei Empfang einer Anforderung eine Abfrage zur Eingabe eines biometrischen Sicherheitsmerkmals durchzuführen, nach der Eingabe das eingegebene biometrische Sicherheitsmerkmal lokal zu authentifizieren, nur im Fall der Eingabe eines autorisierten biometrischen Sicherheitsmerkmals den Zugriff auf den privaten Schlüssel zu gewähren, mit dem privaten Schlüssel die Transaktionskennung zu signieren und die signierte Transaktionskennung an den Authentifizierungsdienst zurück zu übermitteln, und wobei der Authentifizierungsdienst eingerichtet ist, die Signatur der signierten Transaktionskennung zu verifizieren und bei Vorliegen einer authentischen Signatur eine Bestätigung der Anfrage zur Freigabe der Anwendung zurück an die Anwendung zu übermitteln. Der Authentifizierungsdienst bildet somit eine zentrale Anlaufstelle zur Authentifizierung der registrierten Benutzer, wobei die für die Authentifizierung selbst verwendeten mobilen Endgeräte und der Ablauf der biometrischen Authentifizierung für die zugreifende Anwendung transparent (d.h. nicht sichtbar) ist. Die Anwendung muss lediglich einmal mit dem Authentifizierungsdienst gekoppelt werden bzw. muss nur einmal gegenseitiges Vertrauen hergestellt werden. Anschließende Authentifizierungen können dann vorzugsweise durch initiale Kommunikation der Anwendung mit dem Authentifizierungsserver eingeleitet werden. Der Authentifizierungsdienst ist selbstverständlich weiterhin mit jedem mobilen Endgerät bzw. dem biometrischen Lesegerät gekoppelt, allerdings genügt es, diesen Vorgang nur einmal für beliebig viele externe Anwendungen durchzuführen. Insbesondere können die oben dargelegten Verarbeitungsschritte, welche auf dem mobilen Endgerät stattfinden, durch eine auf dem mobilen Endgerät eingerichtete Authentifizierungsanwendung implementiert sein, so dass ein mobiles Endgerät auch nachträglich durch Nachrüsten (z.B. Downloaden) der Authentifizierungsanwendung für das vorliegende Verfahren eingerichtet werden kann. Die Identifikationsdaten, welche der Authentifizierungsdienst verwendet, um das zu kontaktierende mobile Endgerät zu ermitteln, können entweder einen Benutzer identifizieren, so dass die durch diesen Benutzer registrierten mobilen Endgeräte ermittelt werden können, oder auf andere Weise auf das dem Benutzer zugeordnete mobile Endgerät verweisen. Da der Zugriff auf den privaten Schlüssel nur nach Eingabe eines autorisierten biometrischen Sicherheitsmerkmals gewährt wird, ist das Verfahren gleichwertig mit einer direkten bzw. lokalen biometrischen Authentifizierung. D.h. der private Schlüssel am mobilen Endgerät ist ausschließlich für den Zweck der biometrischen Authentifizierung reserviert. Dabei sollten die Eigenschaften (Länge, Gültigkeitsdauer, verwendeter Algorithmus) des privaten Schlüssels so gewählt werden, dass die Sicherheit der Authentifizierung dadurch gleich bzw. annähernd gleich der Sicherheit einer direkten biometrischen Authentifizierung ist. Als biometrisches Sicherheitsmerkmal kommt z.B. ein Fingerabdruck, ein Iris-Scan, eine Gesichtserkennung oder eine DNA-Analyse in Frage, wobei in manchen Fällen die Anzahl an Authentifizierungsversuchen und der zeitliche Abstand zwischen den Versuchen limitiert werden kann, um Umgehungen der Authentifizierung zu erschweren und die Sicherheit des Verfahrens insgesamt zu erhöhen. Um zusätzlich zur zeitlichen Korrelation (die Transaktion wird üblicher Weise vom Benutzer selbst im Rahmen der externen Anwendung ausgelöst) den Benutzer darüber zu informieren, weshalb eine Authentifizierung notwendig ist, kann zusätzlich zur Transaktionskennung ein Authentifizierungsgrund, z.B. eine Beschreibung der Transaktion, an das mobile Endgerät übermittelt und dem Benutzer mit der Abfrage des Sicherheitsmerkmals angezeigt werden. Außerdem kann die Anwendung nach dem Empfang der Bestätigung der Anfrage eine Nachricht über die erfolgte Freigabe an den Benutzer senden bzw. diesem anzeigen, wobei die Benachrichtigung auch implizit nur durch Freigabe des Zugriffs auf einen abgesicherten Teil der Anwendung erfolgen kann.

Das Authentifizierungsverfahren ist praktisch jederzeit und somit universell einsetzbar, wenn der Authentifizierungsdienst mit dem mobilen Endgerät über eine mobile (d.h. kabellose, weitreichende) Datenverbindung, z.B. 3G, UMTS, LTE oder vergleichbare Technologien, verbunden ist. Vorzugsweise ist auch die anfragende Anwendung zur Initialisierung der Kommunikation mit dem Authentifizierungsserver ebenfalls über eine TCP/IP-Verbindung verbunden. Praktisch ist jede mobile Datenverbindung, welche eine Kommunikation über eine TCP/IP Verbindung zwischen dem mobilen Endgerät und dem Authentifizierungsdienst ermöglicht, einsetzbar. Auf diese Weise können auch alltägliche Authentifizierungsabläufe, wie beim Bestellen eines Films auf einer Set-Top-Box, am Geldautomaten, bei Bankgeschäften am Schalter, beim Einkauf oder für Zutrittskontrollen, unter Anwendung des vorliegenden Authentifizierungsverfahrens abgewickelt werden.

Um das Endgerät, mit welchem die Authentifizierung durchgeführt worden ist, eindeutig zu identifizieren und überprüfen zu können, ob es sich dabei um das zum Zweck der Authentifizierung ermittelte, den Identifikationsdaten entsprechende und vom Authentifizierungsdienst kontaktierte mobile Endgerät handelt, ist es vorteilhaft, wenn der Authentifizierungsdienst die signierte Transaktionskennung mit einem öffentlichen Schlüssel, welcher mit den Identifikationsdaten verknüpft und im Speicher des Authentifizierungsservers hinterlegt ist, verifiziert. Dementsprechend ist eine solche Verifikation dann erfolgreich, wenn die Transaktionskennung mit jenem privaten Schlüssel signiert wurde, welcher mit dem hinterlegten öffentlichen Schlüssel korrespondiert. Hätte ein anderes Endgerät als das kontaktierte Endgerät die Transaktionskennung signiert, würde die Verifikation auch dann fehlschlagen, wenn die Signatur mit einem anderen, gegebenenfalls sogar registrierten öffentlichen Schlüssel überprüfbar ist bzw. entschlüsselt werden kann.

Weiters ist es günstig, wenn der Authentifizierungsdienst die Bestätigung mit einem benutzerunabhängigen privaten Schlüssel signiert. Die Bestätigung würde dementsprechend vor der Übermittlung zurück an die Anwendung signiert werden. Auf diese Weise kann verhindert werden, dass die Bestätigung über die Identifikationsdaten hinaus gehende Rückschlüsse auf den Benutzer oder das mobile Endgerät zulässt. Insbesondere enthält die Bestätigung keine dem Benutzer oder dem mobilen Endgerät zuordenbare Signatur oder sonstige charakteristische Eigenschaften, welche nicht bereits in den - der Anwendung ohnehin notwendiger Weise bekannten - Identifikationsdaten enthalten ist bzw. sind. Dadurch werden private Daten des Benutzers, z.B. in welchen Zeiträumen welches mobile Endgerät verwendet wird, wie oft er das mobile Endgerät wechselt oder ähnliches, vom Authentifizierungsdienst geschützt und vor den zugreifenden Anwendungen verborgen.

Darüber hinaus hat es sich als besonders vorteilhaft herausgestellt, wenn mit der Transaktionskennung eine am mobilen Endgerät vom Benutzer modifizierbare Transaktionseigenschaft und mit der signierten Transaktionskennung eine entsprechende, gegebenenfalls geänderte Transaktionseigenschaft übermittelt wird. Die Transaktionseigenschaft kann dabei beliebige, mit der Anfrage bzw. der Transaktionskennung verknüpfte Daten enthalten. Während die Transaktionskennung vorzugsweise eindeutig oder sogar einzigartig ist, um eine Verwechslung verschiedener Transaktionen im Authentifizierungsdienst zu vermeiden, kann die Transaktionseigenschaft beliebige Werte annehmen. Insbesondere kann es sich dabei um Daten und Werte handeln, welche die Transaktion charakterisieren, so dass die Authentifizierung z.B. als bedingte Freigabe einer durch die Transaktionseigenschaft genauer spezifizierten Transaktion verwendbar ist. Dementsprechend wird ein durch die Authentifizierung bestätigter Wert der Transaktionseigenschaft, insbesondere unter Berücksichtigung etwaiger am mobilen Endgerät vorgenommener Modifikationen, mit der Bestätigung an die Anwendung weitergegeben. Als Transaktionseigenschaft können einer Transaktion z.B. ein freigegebener Zahlungsbetrag bei einem Zahlungsvorgang oder die Dauer einer Freigabe bei einer Dienstleistung oder einer temporären Berechtigung zugeordnet sein. Bei Übermittlung eines freigegebenen Zahlungsbetrags kann mit der Authentifizierung so etwa nur ein Teil einer Transaktionssumme freigegeben werden und es kann anschließend seitens der Anwendung versucht werden, den Rest der Transaktionssumme auf anderem Weg, z.B. über einen weiteren mit der Transaktion verknüpften Benutzer, dessen Identifikationsdaten der Anwendung bekannt sind, freigeben zu lassen. Auf diese Weise können beispielsweise gemeinsame Rechnungen von mehreren Teilnehmern geteilt und jeweils teilweise bezahlt werden. Während die Transaktionskennung vorzugsweise vom Authentifizierungsdienst generiert bzw. vergeben wird, wird die Transaktionseigenschaft von der Anwendung vorgegeben oder zumindest initialisiert und gegebenenfalls vom mobilen Endgerät modifiziert.

Vor allem für sicherheitskritische Transaktionen oder um einen Konsens zwischen mehreren Berechtigten zu verifizieren, ist es außerdem besonders günstig, wenn der Authentifizierungsdienst auf Basis der Identifikationsdaten die Adressen von zumindest zwei mobilen Endgeräten ermittelt und eine Anforderung mit einer Transaktionskennung an die zumindest zwei mobilen Endgeräte übermittelt, wobei eine Bestätigung der Anfrage nur dann an die Anwendung übermittelt wird, wenn von sämtlichen Endgeräten eine authentisch signierte Transaktionskennung empfangen wurde. Somit kann beispielsweise eine Überprüfung einer Transaktion nach dem Vier-Augen-Prinzip, d.h. zwei (oder mehr) Benutzer müssen die Transaktion freigeben, realisiert werden, wenn die Identifikationsdaten dementsprechend mit zumindest zwei Benutzern verknüpft sind. In diesem Fall sind die zumindest zwei mobilen Endgeräte jeweils mit den verschiedenen Benutzern verknüpft. Es kann aber auch eine mehrfache biometrische Authentifizierung eines einzelnen Benutzers auf diese Weise zusätzlich abgesichert werden, wenn die zumindest zwei mobilen Endgeräte mit demselben Benutzer verknüpft sind und verschiedene biometrische Sicherheitsmerkmale überprüfen, z.B. sowohl einen Fingerabdruck als auch eine Gesichtserkennung. Analog ist es ebenso denkbar, dass zwei unterschiedliche Benutzer hintereinander zur Eingabe eines jeweiligen biometrischen Sicherheitsmerkmals am selben mobilen Endgerät aufgefordert werden.

Im Zusammenhang mit einer solchen mehrfachen Authentifizierung ist es vorteilhaft, wenn der Authentifizierungsdienst eine Überprüfungsreihenfolge einhält, wobei eine von einem ersten mobilen Endgerät authentisch signierte Transaktionskennung an ein zweites mobiles Endgerät übermittelt wird, und wobei eine Bestätigung der Anfrage nur dann übermittelt wird, wenn eine von sämtlichen mobilen Endgeräten authentisch signierte Transaktionskennung vorliegt. Auf diese Weise kann der Ablauf der Authentifizierung vorab festgelegt werden und es kann beispielsweise eine stufenweise Freigabe realisiert werden. Es kann z.B. bei einer Vielzahl von nicht autorisierten Anfragen eine Vorauswahl delegiert werden, so dass die letzte Authentifizierung in der Überprüfungsreihenfolge erst dann eingeleitet wird, wenn die betreffende Transaktion in einer ein- oder mehrstufigen Vorauswahl bereits freigegeben bzw. zugelassen wurde.

Damit die Anwendung auch nach einem Wechsel des mobilen Endgeräts oder bei Verwendung mehrerer mobiler Endgeräte die Authentifizierung ohne Anpassung der Anfrage und somit ohne Veränderung der Anwendung durchführen kann, ist es günstig, wenn die Identifikationsdaten eine vom Benutzer beim Authentifizierungsdienst registrierte, von der Adresse des mobilen Endgeräts unabhängige Benutzerkennung aufweisen. Die Benutzerkennung steht somit praktisch stellvertretend für ein oder mehrere mobile Endgeräte des Benutzers bzw. zumindest eines Benutzers, für welchen letztendlich die biometrische Authentifizierung durchgeführt wird. Auf diese Weise kann der Benutzer bei Verwendung eines anderen oder eines zusätzlichen mobilen Endgeräts dieses auf einfache Weise nur dem Authentifizierungsdienst bekannt geben, wonach sofort sämtliche auf den Authentifizierungsdienst zugreifende Anwendungen von dem neuen Endgerät Gebrauch machen und davon profitieren können.

Um eine Manipulation des Authentifizierungsverfahrens zu verhindern bzw. möglichst zu erschweren, ist es vorteilhaft, wenn zur Initialisierung des Authentifizierungsverfahrens der private Schlüssel am mobilen Endgerät erzeugt und mit einem autorisierten biometrischen Sicherheitsmerkmal verknüpft wird. Der private Schlüssel wird vorzugsweise in einem geschützten Speicher des mobilen Endgeräts gespeichert und soll das mobile Endgerät niemals verlassen. Dementsprechend wird ein Schlüsselpaar intern im mobilen Endgerät erzeugt und nur der öffentliche Schlüssel des Schlüsselpaars an den Authentifizierungsdienst übermittelt. Um eine Fälschung der Authentifizierung durch eine unrechtmäßige Übertragung des privaten Schlüssels zu verhindern, kann eine IMEI (International Mobile Equipment Identity) des mobilen Endgeräts als Teil des Schlüssels verwendet werden. Beispielsweise kann die IMEI, oder ein vergleichbares Identifizierungsmerkmal des mobilen Endgeräts, an einen zufällig generierten Schlüssel angehängt oder dem Schlüssel vorangestellt werden.

Zur Absicherung des Authentifizierungsverfahrens und um einen Missbrauch eines entwendeten mobilen Endgeräts durch Dritte zu vermeiden, ist es günstig, wenn zur Terminierung des Authentifizierungsverfahrens der Authentifizierungsdienst einen Löschbefehl an das mobile Endgerät übermittelt, und das mobile Endgerät bei Empfang des Löschbefehls den privaten Schlüssel dauerhaft löscht. Dadurch ist es unmöglich, mit dem mobilen Endgerät weiterhin gültige Signaturen für Transaktionskennungen zu erstellen, und das mobile Endgerät ist für zukünftige Authentifizierungen ungeeignet.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 einen Anwendungsfall mit einem Benutzer, der sich für den Zugriff auf eine Anwendung an einem mobilen Endgerät authentifiziert;
Fig. 2 ein schematisches Sequenzdiagramm für den Ablauf einer Authentifizierung bei dem in Fig. 1 dargestellten Anwendungsfall;
Fig. 3 einen weiteren Anwendungsfall mit drei Benutzern, wobei zwei Benutzer den Zugriff eines dritten Benutzers auf eine Anwendung authentifizieren;
Fig. 4 ein schematisches Sequenzdiagramm für den Ablauf einer Authentifizierung bei dem in Fig. 3 dargestellten Anwendungsfall; und
Fig. 5 ein alternatives schematisches Sequenzdiagramm für den Ablauf einer Authentifizierung bei dem in Fig. 3 dargestellten Anwendungsfall.

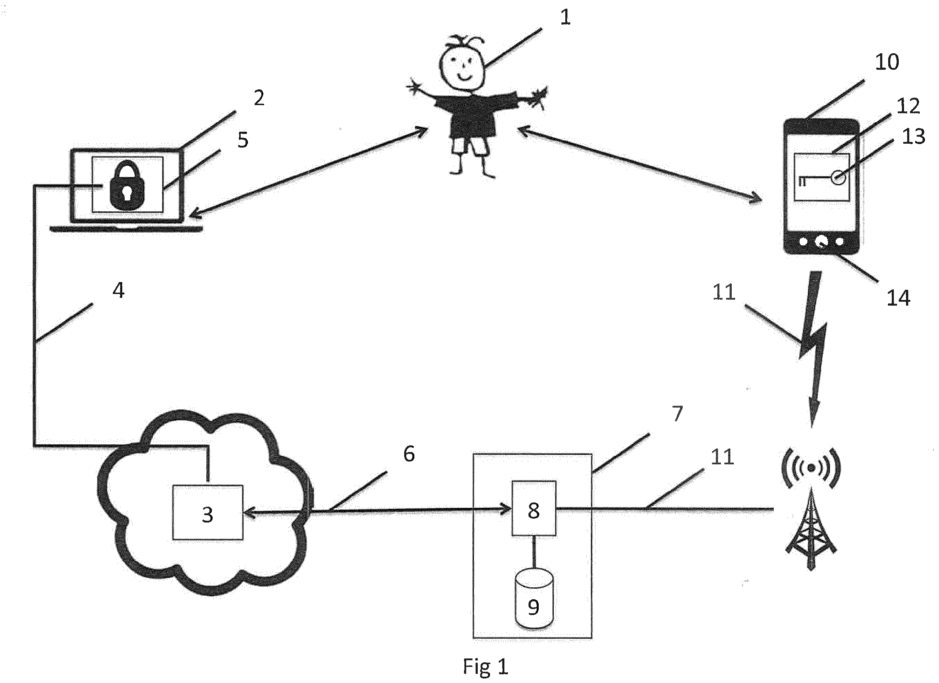

Bei dem in Fig. 1 dargestellten Ausführungsbeispiel greift ein Benutzer 1 mit einem Notebook 2 auf eine Anwendung 3 zu. Die Anwendung 3 ist dabei eine Internetanwendung, deren Benutzerschnittstelle in Form eines mit der Anwendung 3 über eine Datenverbindung 4 verbundenen Clients 5 auf dem Notebook 2 angezeigt bzw. ausgeführt wird. Teile der Anwendung 3 sind zugriffgeschützt und erfordern eine Authentifikation eines autorisierten Benutzers. Bei der in Fig. 1 dargestellten Situation greift der Benutzer 1 auf einen solchen zugriffgeschützten Teil der Anwendung 3 zu. Die Anwendung 3 stellt daraufhin eine Datenverbindung 6 mit einem auf einem Authentifizierungsserver 7 laufenden Authentifizierungsdienst 8 her und übermittelt an den Authentifizierungsdienst 8 eine Anfrage, welche zumindest Identifikationsdaten des Benutzers 1 umfasst. Der Authentifizierungsdienst 8 generiert daraufhin zunächst eine eindeutige Transaktionskennung, welche mit der Anfrage verknüpft ist. Der Authentifizierungsdienst 8 ist mit einem Speicher 9 des Authentifizierungsservers 7 verbunden, welcher Speicher 9 in Form einer Datenbank verwaltet wird. Die Datenbank umfasst eine Sammlung von registrierten Benutzern, wobei mit jedem Benutzer vorzugsweise zumindest ein mobiles Endgerät verknüpft ist. D.h. die Datenbank umfasst eine Tabelle mit Zuordnungen zwischen den Benutzern und den Adressen der jeweils verknüpften mobilen Endgeräte. Anhand der erhaltenen Identifikationsdaten kann der Authentifizierungsdienst 8 somit die Adressen jener mobilen Endgeräte ermitteln, welche dem durch die Identifikationsdaten bezeichneten Benutzer 1 zugeordnet sind. Sofern keine entsprechende Adresse gefunden werden kann, schlägt die Authentifizierung fehl und die Anwendung 3 wird entsprechend informiert. Falls zumindest eine Adresse eines mobilen Endgeräts 10 gefunden wird, stellt der Authentifizierungsdienst 8 eine Datenverbindung 11 mit dem mobilen Endgerät 10 her und übermittelt eine Anforderung mit der zuvor generierten Transaktionskennung über diese Datenverbindung an das mobile Endgerät 10. Das mobile Endgerät 10 umfasst einen Speicher 12, in welchem ein privater Schlüssel 13 gespeichert ist. Außerdem weist das mobile Endgerät 10 eine Leseeinrichtung 14 für ein biometrisches Sicherheitsmerkmal auf, insbesondere ein Fingerabdrucklesegerät. Der Zugriff auf den lokal im mobilen Endgerät 10 bzw. dessen Speicher 12 gespeicherten privaten Schlüssel 13 ist dabei durch ein mittels der ebenfalls lokalen, vorzugsweise im mobilen Endgerät 10 integrierten Leseeinrichtung 14 einlesbares biometrisches Sicherheitsmerkmal des Benutzers 1 geschützt, d.h. der Zugriff auf den privaten Schlüssel 13 wird nur und erst nach Eingabe eines autorisierten biometrischen Sicherheitsmerkmals an der Leseeinrichtung 14 gewährt. Bei Erhalt der Anforderung vom Authentifizierungsdienst 8 führt das mobile Endgerät 10 eine Abfrage zur Eingabe eines biometrischen Sicherheitsmerkmals des Benutzers 1 an der Leseeinrichtung 14 durch, d.h. der Benutzer 1 wird von dem mobilen Endgerät 10 benachrichtigt, z.B. in Form eines Ton- und/oder Vibrationssignals, dass eine Authentifizierung anhängig und die Eingabe eines biometrischen Sicherheitsmerkmals zur Freigabe erforderlich ist. Die Anforderung wird demzufolge von der Anwendung 3 praktisch per Fernsteuerung und im Allgemeinen ohne Benutzerinteraktion mit dem mobilen Endgerät 10 ausgelöst. Sobald der Benutzer 1 der Anforderung nachkommt und ein autorisiertes biometrisches Sicherheitsmerkmal eingibt, wird - wie bereits erläutert - zunächst lokal der Zugriff auf den privaten Schlüssel 13 freigegeben. Das Ergebnis der Benutzereingabe selbst, d.h. das eingegebene biometrische Sicherheitsmerkmal wird nur für die Zugriffskontrolle auf den privaten Schlüssel verwendet und wird keinesfalls von dem mobilen Endgerät 10 nach außen, insbesondere auch nicht an den Authentifizierungsdienst 8, übertragen. Mit dem nun zugreifbaren privaten Schlüssel 13 wird im mobilen Endgerät 10 die vom Authentifizierungsdienst 8 erhaltene Transaktionskennung signiert. Dabei wird beispielsweise die Transaktionskennung selbst oder ein Hash der Transaktionskennung mit dem privaten Schlüssel 13 verschlüsselt und das Ergebnis als Signatur an die Transaktionskennung angehängt. Die signierte Transaktionskennung wird anschließend zurück an den Authentifizierungsdienst 8 übermittelt. Im Speicher 9 des Authentifizierungsdienstes 8 ist der mit dem privaten Schlüssel 13 korrespondierende öffentliche Schlüssel (nicht gezeigt) gespeichert, welcher nun zur Verifikation der Signatur verwendet wird. Dabei wird die Signatur mit dem öffentlichen Schlüssel entschlüsselt und das Ergebnis mit der Transaktionskennung bzw. mit deren Hash verglichen. Falls der Vergleich erfolgreich ist, d.h. eine Übereinstimmung festgestellt wird, ist die Signatur als authentisch anzusehen und der Authentifizierungsdienst 8 übermittelt eine positive Bestätigung der Anfrage zurück an die Anwendung 3. Um die Verifikation zusätzlich abzusichern, können mit den Adressen der mobilen Endgeräte 10 assoziierte öffentliche Schlüssel im Speicher 9 gesichert sein, mit denen nicht nur die Authentizität der Signatur sondern auch deren Herkunft, d.h. die Identität des die Signatur ausstellenden mobilen Endgeräts 10, überprüft werden kann. Außerdem kann der Authentifizierungsdienst 8 die Bestätigung mit einer eigenen, benutzerunabhängigen (bzw. globalen) Signatur versehen, welche mit einem am Authentifizierungsserver 7 gespeicherten privaten Schlüssel des Authentifizierungsdienstes 8 erstellt wird. Die Anwendung 3 kann die Signatur der Bestätigung mit einem einzigen öffentlichen Schlüssel, nämlich dem des Authentifizierungsdienstes 8, überprüfen. Sobald die Anwendung 3 eine positive und vorzugsweise signierte Bestätigung vom Authentifizierungsdienst 8 erhält, kann sie den Zugriff auf den abgesicherten Teil der Anwendung 3 freigeben.

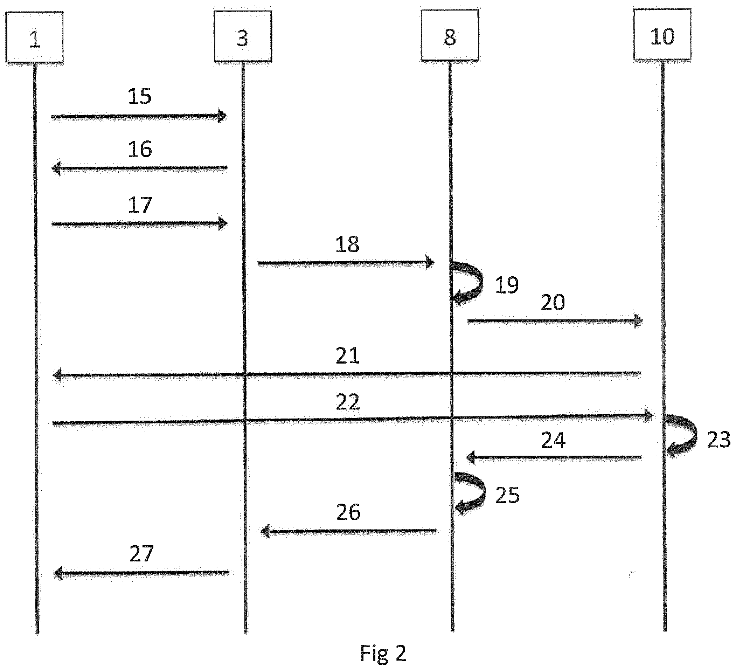

Fig. 2 stellt den oben bereits grob beschriebenen Ablauf noch einmal im Detail dar. Dabei wird zunächst der Benutzer 1 Zugriff auf einen abgesicherten Teil der Anwendung 3 anfordern (Schritt 15). Auf die Anforderung 15 antwortet die Anwendung 3 mit einer Abfrage 16 einer Benutzeridentifikation. Nach Eingabe 17 der Benutzeridentifikation übermittelt die Anwendung 3 eine Anfrage 18 mit den entsprechenden Identifikationsdaten an den Authentifizierungsdienst 8. Der Authentifizierungsdienst 8 führt lokal eine Datenbankabfrage 19 der Adressen von den Identifikationsdaten zugeordneten mobilen Endgeräten durch und generiert eine der Anfrage 18 zugeordnete Transaktionskennung. Anschließende übermittelt der Authentifizierungsdienst 8 an zumindest ein durch die aufgefundenen Adressen erreichbares mobiles Endgerät 10 eine Anforderung 20 mit der generierten Transaktionskennung. Am mobilen Endgerät 10, welches die Anforderung 20 erhält, wird eine Abfrage 21 vom Benutzer 1 zur Eingabe eines biometrischen Sicherheitsmerkmals durchgeführt. Sobald der Benutzer eine Eingabe 22 des abgefragten biometrischen Sicherheitsmerkmals ausgeführt hat, wird am mobilen Endgerät 10 Zugriff auf einen lokal gespeicherten privaten Schlüssel 13 gewährt und mit dem privaten Schlüssel 13 zumindest die vom Authentifizierungsdienst 8 erhaltene Transaktionskennung signiert (Schritt 23). Es folgt die Übermittlung 24 der signierten Transaktionskennung vom mobilen Endgerät 10 an den Authentifizierungsdienst 8. Letzterer nimmt eine Überprüfung 25 der Signatur vor und übermittelt bei positivem Ausgang der Überprüfung 25 eine Bestätigung 26 der Anfrage bzw. der erfolgreichen Authentifizierung zurück an die Anwendung 3. Die Anwendung 3 sendet schließlich eine Benachrichtigung 27 über die erfolgte Freigabe an den Benutzer 1, wobei die Benachrichtigung auch implizit nur durch Freigabe des Zugriffs auf einen abgesicherten Teil der Anwendung 3 erfolgen kann.

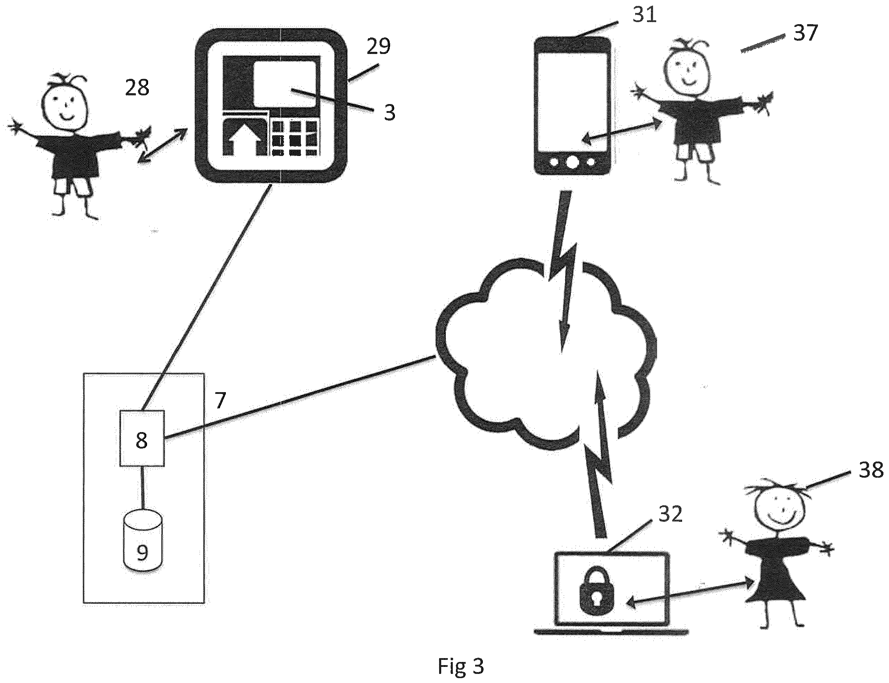

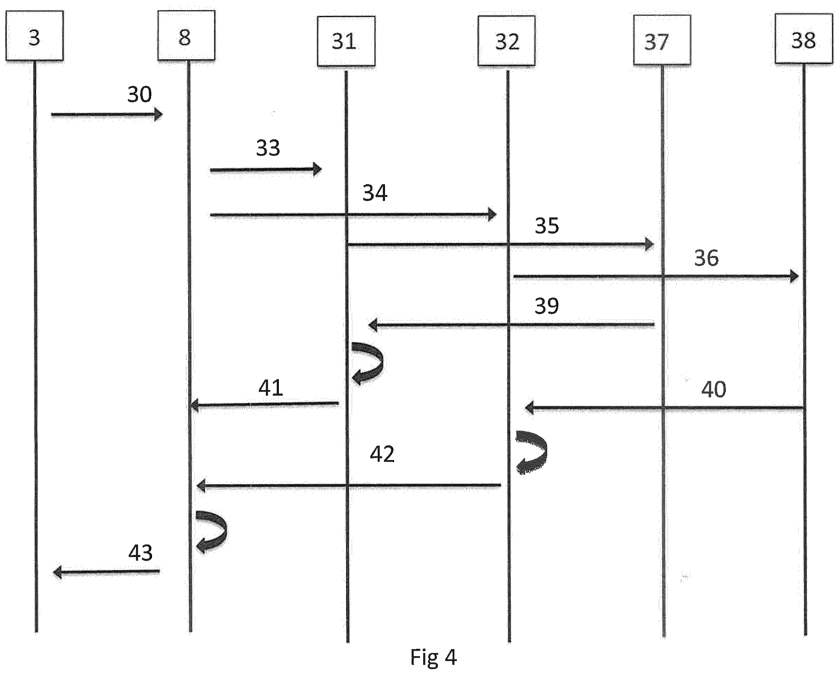

Ein weiterer Anwendungsfall ist in Fig. 3 schematisch dargestellt und der zugehörige Ablauf der Authentifizierung ist in Fig. 4 gezeigt. Hierbei löst ein erster Benutzer 28 an einem Anwendungsterminal 29 (z.B. einem Geldautomaten) eine Transaktion aus. Die auf dem Anwendungsterminal 29 laufende Anwendung 3 erkennt dabei anhand einer vom ersten Benutzer 28 eingegebenen Benutzeridentifikation (z.B. einer Karten- oder Kontonummer), dass eine Freigabe der Transaktion über den Authentifizierungsdienst 8 erforderlich ist. Dementsprechend sendet die Anwendung 3 eine Anfrage 30 mit den Identifikationsdaten des ersten Benutzers 28 an den Authentifizierungsdienst 8. Im Speicher 9 des Authentifizierungsdienstes 8 sind mit den Identifikationsdaten zwei verschiedene mobile Endgeräte 31, 32 verknüpft und festgelegt, dass eine Authentifizierung an beiden Endgeräten 31, 32 erforderlich ist. Der Authentifizierungsdienst 8 sendet daher an beide Endgeräte 31, 32 entsprechende Authentifizierungsanforderungen 33, 34, wobei der Authentifizierungsdienst 8 mit den Endgeräten 31, 32 jeweils über Internetverbindungen verbunden ist. Beide Endgeräte 31, 32 führen daraufhin eine Abfrage 35, 36 eines biometrischen Sicherheitsmerkmals des jeweiligen Benutzers 37, 38 durch und senden gegebenenfalls nach erfolgter Eingabe 39, 40 in bekannter Weise signierte Transaktionskennungen 41, 42 zurück an den Authentifizierungsdienst 8. Dieser sendet die Bestätigung 43 der Anfrage 30 erst dann an die Anwendung 3 zurück, wenn von allen erforderlichen mobilen Endgeräten 31, 32 signierte und verifizierte Transaktionskennungen eingelangt sind.

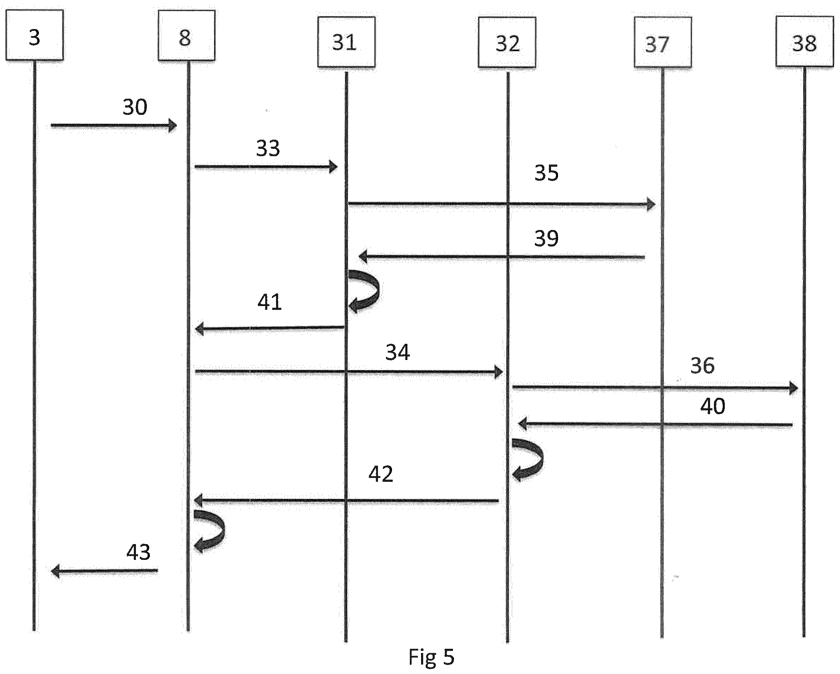

Ein alternativer Ablauf der Authentifizierung mit einer festgelegten Überprüfungsreihenfolge ist in Fig. 5 dargestellt, wobei für die einzelnen Verfahrensschritte und -beteiligten dieselben Bezugsziffern wie in Fig. 4 verwendet wurden. Um Wiederholungen zu vermeiden wird daher bezüglich der einzelnen Vorgänge auf die obigen Beschreibungen verwiesen, wobei im Unterschied zu Fig. 4 die Reihenfolge der Schritte 33, 34, 35, 36, 39, 40, 41 und 42 eine andere ist. Insbesondere wird die Authentifizierungsanforderung 34 an das zweite mobile Endgerät 32 erst übermittelt, nachdem der Authentifizierungsdienst 8 eine authentisch signierte Transaktionskennung 41 und somit eine erfolgreiche Authentifizierung am ersten mobilen Endgerät 31 feststellt. Somit ist die Reihenfolge, in welcher sich die beiden Benutzer 37, 38 der mobilen Endgeräte 31, 32 zu authentifizieren haben, fest vorgegeben. Der Vorteil bei diesem Verfahren liegt darin, dass bei einer Ablehnung der Authentifizierung durch den ersten Benutzer 37 der zweite Benutzer 38 nicht mit einer - in diesem Fall ohnehin überflüssigen - Authentifizierungsanforderung belästigt wird. Bei dem Verfahren gemäß Fig. 4 kann ein ähnlicher Vorteil dadurch erzielt werden, dass bei einer Ablehnung der Authentifizierung an einem Endgerät 31, 32 automatisch die Authentifizierungsanforderung 34, 33 des jeweils anderen bzw. der übrigen Endgeräte 32, 31 zurückgezogen wird.

Im Rahmen der hier geschilderten Verfahrensabläufe und Systeme liegt es selbstverständlich im Ermessen des Fachmanns, zusätzliche, allgemeine Sicherheitsvorkehrungen vorzusehen. Dies gilt insbesondere für die Datenverbindungen zwischen dem Authentifizierungsdienst 8 und den mobilen Endgeräten 10, 31, 32, wobei vorzugsweise bei Registrierung eines Endgeräts eine Zweiwege-Authentifizierung zwischen dem Endgerät 10, 31, 32 und dem Authentifizierungsdienst 8 etabliert und für alle ausgetauschten Nachrichten eine entsprechend verschlüsselte Kommunikation verwendet wird. Ähnliche Maßnahmen können auch zwischen der oder den Anwendung(en) 3 und dem Authentifizierungsdienst 8 vorgesehen sein. Angesichts der Abhängigkeit der Anwendung 3 von der Verfügbarkeit des Authentifizierungsdienstes 8 können grundsätzlich auch mehrere redundante Instanzen des Authentifizierungsdiensts 8 bzw. mehrere Authentifizierungsserver 7 vorgesehen sein.

## Patentansprüche

1. Verfahren zur Authentifizierung eines Benutzers (1), wobei
eine externe Anwendung (3) eine Anfrage (18) mit Identifikationsdaten an einen Authentifizierungsdienst (8) übermittelt,
der Authentifizierungsdienst (8) auf Basis der Identifikationsdaten die Adresse eines mit dem Benutzer (1) verknüpften mobilen Endgeräts (10) ermittelt und eine Anforderung (20) mit einer Transaktionskennung an das mobile Endgerät (10) übermittelt,
das mobile Endgerät (10) die Anforderung (20) empfängt und ausgelöst durch den Empfang der Anforderung (20) eine Abfrage (21) zur Eingabe eines biometrischen Sicherheitsmerkmals durchführt, nach der Eingabe (22) das eingegebene biometrische Sicherheitsmerkmal lokal authentifiziert und nur im Fall der Eingabe eines autorisierten biometrischen Sicherheitsmerkmals den Zugriff auf einen am mobilen Endgerät (10) gespeicherten privaten Schlüssel (13) gewährt, mit dem privaten Schlüssel (14) die Transaktionskennung signiert und die signierte Transaktionskennung an den Authentifizierungsdienst (8) zurück übermittelt, und
der Authentifizierungsdienst (8) die Signatur der signierten Transaktionskennung verifiziert und bei Vorliegen einer authentischen Signatur eine Bestätigung (26) der Anfrage (18) zur Freigabe der Anwendung (3) zurück an die Anwendung (3) übermittelt.

2. Verfahren nach Anspruch 1, **dadurch gekennzeichnet, dass** der Authentifizierungsdienst (8) mit dem mobilen Endgerät (10) über eine mobile Datenverbindung (11) verbunden ist.

3. Verfahren nach einem der Ansprüche 1 oder 2, **dadurch gekennzeichnet, dass** der Authentifizierungsdienst (8) die signierte Transaktionskennung mit einem öffentlichen Schlüssel, welcher mit den Identifikationsdaten verknüpft ist, verifiziert.

4. Verfahren nach einem der Ansprüche 1 bis 3, **dadurch gekennzeichnet, dass** der Authentifizierungsdienst (8) die Bestätigung (26) mit einem benutzerunabhängigen privaten Schlüssel signiert.

5. Verfahren nach einem der Ansprüche 1 bis 4, **dadurch gekennzeichnet, dass** mit der Transaktionskennung eine am mobilen Endgerät (10) vom Benutzer (1) modifizierbare Transaktionseigenschaft und mit der signierten Transaktionskennung eine entsprechende, gegebenenfalls geänderte Transaktionseigenschaft übermittelt wird.

6. Verfahren nach einem der Ansprüche 1 bis 5, **dadurch gekennzeichnet, dass** der Authentifizierungsdienst (8) auf Basis der Identifikationsdaten die Adressen von zumindest zwei mobilen Endgeräten (31, 32) ermittelt und eine Anforderung (33, 34) mit einer Transaktionskennung an die zumindest zwei mobilen Endgeräte übermittelt, wobei eine Bestätigung (43) der Anfrage (30) nur dann an die Anwendung (3) übermittelt wird, wenn von sämtlichen Endgeräten (31, 32) eine authentisch signierte Transaktionskennung empfangen wurde.

7. Verfahren nach Anspruch 6, **dadurch gekennzeichnet, dass** der Authentifizierungsdienst (8) eine Überprüfungsreihenfolge einhält, wobei eine von einem ersten mobilen Endgerät (31) authentisch signierte Transaktionskennung an ein zweites mobiles Endgerät (32) übermittelt wird, und wobei eine Bestätigung (43) der Anfrage (30) nur dann übermittelt wird, wenn eine von sämtlichen mobilen Endgeräten (31, 32) authentisch signierte Transaktionskennung vorliegt.

8. Verfahren nach einem der Ansprüche 1 bis 7, **dadurch gekennzeichnet, dass** die Identifikationsdaten eine vom Benutzer (1) beim Authentifizierungsdienst (8) registrierte, von der Adresse des mobilen Endgeräts (10) unabhängige Benutzerkennung aufweisen.

9. Verfahren zur Initialisierung eines Verfahrens nach einem der Ansprüche 1 bis 8, **dadurch gekennzeichnet, dass** der private Schlüssel (13) am mobilen Endgerät (10) erzeugt und mit einem autorisierten biometrischen Sicherheitsmerkmal verknüpft wird.

10. Verfahren zur Terminierung eines Verfahrens nach einem der Ansprüche 1 bis 9, **dadurch gekennzeichnet, dass** der Authentifizierungsdienst (8) einen Löschbefehl an das mobile Endgerät (10) übermittelt, und das mobile Endgerät (10) bei Empfang des Löschbefehls den privaten Schlüssel (13) dauerhaft löscht.

11. System zur Authentifizierung eines Benutzers (1), umfassend einen Authentifizierungsserver (7), welcher einen Authentifizierungsdienst (8) hostet, und ein mobiles Endgerät (10), welches zur Kommunikation mit dem Authentifizierungsserver (7) eingerichtet ist, wobei der Authentifizierungsserver (7) einen Speicher (9) aufweist, welcher Identifikationsdaten zur Identifikation des Benutzers (1) und eine mit den Identifikationsdaten verknüpfte Adresse des mobilen Endgeräts (10) enthält, wobei der Authentifizierungsdienst (8) zum Empfang einer Anfrage (18) mit Identifikationsdaten von einer externen Anwendung (3) eingerichtet ist, wobei das mobile Endgerät (10) zur lokalen Überprüfung eines biometrischen Sicherheitsmerkmals eingerichtet ist und einen Speicher (12) aufweist, welcher einen durch ein biometrisches Sicherheitsmerkmal geschützten privaten Schlüssel (13) enthält, **dadurch gekennzeichnet, dass** das mobile Endgerät (10) eingerichtet ist, eine Anforderung (20) mit einer Transaktionskennung vom Authentifizierungsdienst (8) zu empfangen, bei Empfang einer Anforderung (20) eine Abfrage (21) zur Eingabe eines biometrischen Sicherheitsmerkmals durchzuführen, nach der Eingabe (22) das eingegebene biometrische Sicherheitsmerkmal lokal zu authentifizieren, nur im Fall der Eingabe eines autorisierten biometrischen Sicherheitsmerkmals den Zugriff auf den privaten Schlüssel (13) zu gewähren, mit dem privaten Schlüssel (13) die Transaktionskennung zu signieren und die signierte Transaktionskennung an den Authentifizierungsdienst (8) zurück zu übermitteln, und wobei der Authentifizierungsdienst (8) eingerichtet ist, die Signatur der signierten Transaktionskennung zu verifizieren und bei Vorliegen einer authentischen Signatur eine Bestätigung (26) der Anfrage (18) zur Freigabe der Anwendung (3) zurück an die Anwendung (3) zu übermitteln.

## Claims

1. A method for authenticating a user (1), wherein
an external application (3) transmits a query (18) comprising identification data to an authentication service (8),
the authentication service (8) determines the address of a mobile terminal (10) linked to the user (1) on the basis of the identification data and transmits a request (20) comprising a transaction identifier to the mobile terminal (10),
the mobile terminal (10) receives the request (20) and, triggered by the receipt of the request (20), performs an enquiry (21) for input of a biometric security feature, locally authenticates the input biometric security feature upon input (22) and grants access to a private key (13) saved on the mobile terminal (10) only in the case of input of an authorized biometric security feature, signs the transaction identifier using the private key (14) and transmits the signed transaction identifier back to the authentication service (8), and
the authentication service (8) verifies the signature of the signed transaction identifier and, in the case of the presence of an authentic signature, transmits a confirmation (26) of the query (18) for approval of the application (3) back to the application (3).

2. The method according to claim 1, **characterized in that** the authentication service (8) is connected with the mobile terminal (10) via a mobile data connection (11).

3. The method according to anyone of claims 1 or 2, **characterized in that** the authentication service (8) verifies the signed transaction identifier using a public key which is linked with the identification data.

4. The method according to anyone of claims 1 to 3, **characterized in that** the authentication service (8) signs the confirmation (26) using a user-independent private key.

5. The method according to anyone of claims 1 to 4, **characterized in that**, together with the transaction identifier, a transaction characteristic modifiable at the mobile terminal (10) by the user (1) is transmitted, and that, together with the signed transaction identifier, a corresponding, possibly modified transaction characteristic is transmitted.

6. The method according to anyone of claims 1 to 5, **characterized in that** the authentication service (8) determines the addresses of at least two mobile terminals (31, 32) on the basis of the identification data and transmits a request (33, 34) comprising a transaction identifier to the at least two mobile terminals, wherein a confirmation (43) of the query (30) will only be transmitted to the application (3) when an authentically signed transaction identifier has been received from all terminals (31, 32).

7. The method according to claim 6, **characterized in that** the authentication service (8) observes a verification sequence, wherein a transaction identifier authentically signed by a first mobile terminal (31) is transmitted to a second mobile terminal (32), and wherein a confirmation (43) of the query (30) will only be transmitted when a transaction identifier authentically signed by all mobile terminals (31, 32) is present.

8. The method according to anyone of claims 1 to 7, **characterized in that** the identification data comprise a user identifier registered by the user (1) at the authentication service (8) and being independent of the address of the mobile terminal (10).

9. A method for initializing a method according to anyone of claims 1 to 8, **characterized in that** the private key (13) is generated at the mobile terminal (10) and is coupled with an authorized biometric security feature.

10. A method for terminating a method according to any one of claims 1 to 9, **characterized in that** the authentication service (8) transmits an erase instruction to the mobile terminal (10), and that the mobile terminal (10) permanently erases the private key (13) upon receipt of the erase instruction.

11. A system for authenticating a user (1), comprising an authentication server (7) which hosts an authentication service (8), and a mobile terminal (10) which is configured to communicate with the authentication server (7), wherein the authentication server (7) comprises a memory (9) containing identification data for the identification of the user (1) and an address of the mobile terminal (10) linked with the identification data, wherein the authentication service (8) is configured to receive a query (18) with identification data from an external application (3), wherein the mobile terminal (10) is configured to locally verify a biometric security feature and comprises a memory (12) containing a private key (13) protected by a biometric security feature, **characterized in that** the mobile terminal (10) is configured to receive a request (20) with a transaction identifier from the authentication service (8), to perform an enquiry (21) for input of a biometric security feature upon receipt of a request (20), to locally authenticate the input biometric security feature upon input (22), to grant the access to the private key (13) only in the case of input of an authorized biometric security feature, to sign the transaction identifier using the private key, and to transmit the signed transaction identifier back to the authentication service (8), and wherein the authentication service (8) is configured to verify the signature of the signed transaction identifier and, on existence of an authentic signature, to transmit a confirmation (26) of the query (18) for approval of the application (3) back to the application (3).

## Revendications

1. Procédé d'authentification d'un utilisateur (1), une application externe (3) transmettant une demande (18) avec des données d'identification à un service d'authentification (8),
le service d'authentification (8) déterminant, sur la base des données d'authentification, l'adresse d'un terminal mobile (10) associé à l'utilisateur (1) et transmettant une requête (20) avec un identifiant de transaction au terminal mobile (10),
le terminal mobile (10) recevant la requête et exécutant, suite à la réception de la requête (20), une demande (21) d'entrée d'une caractéristique de sécurité biométrique, après l'entrée (22), la caractéristique de sécurité biométrique entrée étant identifiée localement et l'accès à une clé privée (13) enregistrée sur le terminal mobile (10) étant accordé seulement dans le cas de l'entrée d'une caractéristique de sécurité biométrique autorisée, l'identifiant de transaction étant signé avec la clé privée (14) et l'identifiant de transaction signé étant retransmis au service d'authentification (8) et
le service d'authentification (8) vérifiant la signature de l'identifiant de transaction signé et, en présence d'une signature authentique, retransmettant à l'application (3) une confirmation (26) de la demande (18) de déverrouillage de l'application (3).

2. Procédé selon la revendication 1, **caractérisé en ce que** le service d'authentification (8) est relié avec le terminal mobile (10) par l'intermédiaire d'une liaison de données mobile (11).

3. Procédé selon l'une des revendications 1 ou 2, **caractérisé en ce que** le service d'authentification (8) vérifie l'identifiant de transaction signé avec une clé publique qui est associée aux données d'identification.

4. Procédé selon l'une des revendications 1 à 3, **caractérisé en ce que** le service d'authentification (8) signe la confirmation (26) avec une clé privée indépendante de l'utilisateur.

5. Procédé selon l'une des revendications 1 à 4, **caractérisé en ce que**, avec l'identifiant de transaction, est transmise une propriété de transaction modifiable au niveau du terminal mobile (10) par l'utilisateur (1) et, avec l'identifiant de transaction signé, est transmise une propriété de transaction correspondante, le cas échéant modifiée.

6. Procédé selon l'une des revendications 1 à 5, **caractérisé en ce que** le service d'authentification (8) détermine, sur la base des données d'identification, l'adresse d'au moins deux terminaux mobiles (31, 32) et transmet une requête (33, 34) avec un identifiant de transaction aux au moins deux terminaux mobiles, une confirmation (43) de la demande (30) étant transmise à l'application (3) uniquement si un identifiant de transaction signé de manière authentique a été reçu par tous les terminaux (31, 32).

7. Procédé selon la revendication 6, **caractérisé en ce que** le service d'authentification (8) respecte un ordre de vérification, un identifiant de transaction signé authentique étant transmis par un premier terminal mobile (31) à un deuxième terminal mobile (32) et une confirmation (43) de la demande (30) étant transmise uniquement si un identifiant de transaction signé de manière authentique par tous les terminaux mobiles (31, 32) existe.

8. Procédé selon l'une des revendications 1 à 7, **caractérisé en ce que** les données d'identification comprennent un identifiant d'utilisateur enregistré par l'utilisateur (1) auprès du service d'authentification (8) et indépendant de l'adresse du terminal mobile (10).

9. Procédé d'initialisation d'un procédé selon l'une des revendications 1 à 8, **caractérisé en ce que** la clé privée (13) est générée au niveau du terminal mobile (10) et est associée avec une caractéristique de sécurité biométrique autorisée.

10. Procédé de terminaison d'un procédé selon l'une des revendications 1 à 9, **caractérisé en ce que** le service d'authentification (8) transmet une instruction de suppression au terminal mobile (10) et le terminal mobile (10) supprime la clé privée (13) de manière durable lors de la réception de l'instruction de suppression.

11. Système d'authentification d'un utilisateur (1), comprenant un serveur d'authentification (7), qui héberge un service d'authentification (8), et un terminal mobile (10), qui est conçu pour la communication avec le serveur d'authentification (7), le serveur d'authentification (7) comprenant une mémoire (9), qui contient des données d'identification permettant l'identification de l'utilisateur (1) et une adresse du terminal mobile (10), associée avec les données d'identification, le service d'authentification (8) étant conçu pour la réception d'une demande (18) avec des données d'identification en provenance d'une application externe (3), le terminal mobile (10) étant conçu pour la vérification locale d'une caractéristique de sécurité biométrique et comprenant une mémoire (12), qui contient une clé privée (13) protégée par une caractéristique de sécurité biométrique, **caractérisé en ce que** le terminal mobile (10) est conçu pour recevoir une requête (20) avec un identifiant de transaction en provenance du service d'authentification (8), lors de la réception d'une requête (20), pour effectuer une demande (21) d'entrée d'une caractéristique de sécurité biométrique, après l'entrée (22), pour authentifier localement la caractéristique de sécurité biométrique entrée et pour accorder l'accès ç la clé privée (13) uniquement lors de l'entrée d'une caractéristique de sécurité biométrique autorisée, pour signer l'identifiant de transaction avec la clé privée (13) et pour retransmettre l'identifiant de transaction signé au service d'authentification (8) et le service d'authentification (8) étant conçu pour vérifier la signature de l'identifiant de transaction et, en présence d'une signature authentique, pour transmettre à l'application (3) une confirmation (26) de la demande (18) de déverrouillage de l'application (3).
